# EUROPEAN PATENT SPECIFICATION

(11) **EP 1 986 818 B1**
(45) Date of publication and mention of the grant of the patent: **24.04.2013**
(21) Application number: 07750743.2
(22) Date of filing: 15.02.2007
(51) Int. Cl.: B24D 18/00, B24D 13/04, B24D 13/20, B29C 45/14

(54) **Method of making an abrasive article comprising individual abrasive elements such as flaps**
Verfahren der Herstellung eines Schleifartikels mit einzelnen Schleifelementen, wie z. B. Flaps
Procédé de fabrication d'un article abrasif comportant des éléments abrasifs distincts tels que des volets

(30) Priority: 17.02.2006 GB 0603278
(43) Date of publication of application: 05.11.2008
(73) Proprietor: 3M Innovative Properties Company, St. Paul, MN 55133-3427 (US)
(72) Inventor: LE NORMAND, Jean, F-95006 Cergy Pontoise Cedex (FR)
(74) Representative: Towlson, Samantha Jayne
(86) International application number: PCT/US2007/003924
(87) International publication number: WO 2007/097969

(56) References cited:
- EP-A2- 1 018 404
- EP-B1- 0 790 880
- WO-A1-2006/023178
- DE-A1- 3 301 210
- JP-A- 11 320 423
- JP-A- 11 320 423
- KR-A- 20020 095 941
- US-A- 4 448 590
- US-A1- 2001 011 108

## Description

### FIELD

This invention relates to a method of making an abrasive article and in particular to a method of making an abrasive article comprising a plurality of individual abrasive elements, such as flaps, and a support for securing the abrasive elements to a shaft.

### BACKGROUND

Abrasive articles for polishing and abrading applications are known. Generally such articles are releasably attached to a rotatable chuck, backup pad or shaft of a machine. There are a variety of means for attaching abrasive articles to a machine, such as by releasably securing it to a back-up pad e.g. by pressure sensitive adhesive, hook and loop fastener etc., the back-up pad being attached to the machine by a central boss or spindle. Another means of attachment comprises providing the article with a central hub or boss. The hub may have an internal thread for engagement with a threaded shaft mounted on the machine. Alternatively the hub may have a central aperture through which a threaded shaft mounted on the machine is inserted and secured by a nut. A further means of attachment comprises providing an article with a central shaft which may be engaged by a rotatable chuck mounted on the machine.

JP 11320423A discloses a method of making a polishing disc in which a disc of non-woven fibres having a central aperture is placed in a mould and a boss having a central through aperture is formed by injection moulding a thermoplastic material. The molten thermoplastic material penetrates between the non-woven fibres to secure the boss to the disc. The boss may be provided with an interior thread formed on the perimeter surface of the central aperture to facilitate attachment to a machine.

Our co-pending applicationWO 2006/023178 EP1 1778 438 A (state of the art according to Art 54 (3) EPC) describes a method of making an abrasive article comprising a planar abrasive disc formed of non-woven fibres and a shaft positioned at the centre of the disc. The shaft is coupled to the disc by injecting molten thermoplastic material to form a hub. Figure 8 shows five discs coupled to a single shaft.

The discs are arranged in a linear array with their planes perpendicular to the axis of the shaft.

Abrasive articles comprising a plurality of flaps secured to a shaft are also known. Examples of such products are those available from 3M Company of St. Paul, Minnesota, USA under the names "Scotch-Brite™ Flap Brush" and "Coated Flap Wheel". These products are made of a plurality of flaps of abrasive material, whereby one edge of each flap is bonded to a central core. One method of manufacturing this type of product requires a plurality of flaps to be cut and arranged into a circular array so that the inner edges of the flaps define a cylindrical shaped bore in the centre of the array. An end of a shaft is positioned in the bore and the flaps are secured together and to the shaft to form a circular brush by a central core made by pouring two-part epoxy resin into the bore. While this method of securing the shaft to the flaps is effective, the two-part epoxy resin system is expensive and the production time is undesirably long.

Abrasive flap brushes in which the flaps are secured to a pre-formed central core without an integral shaft are also known. The central core may, for example, be formed from a paper winding that is impregnated with a phenolic resin. The production time of that type of product is also undesirably long.

A method of making an abrasive article as defined in the preamble of claim 1 is known from US 4 4 448 590 A. The invention has been made with the above points in mind.

### SUMMARY OF THE INVENTION

According to the present invention there is provided a method of making an abrasive article comprising a plurality of individual abrasive elements having a first face and an opposing second face and a support for securing the abrasive elements to a shaft, the method comprising arranging the abrasive elements into a circular array such that at least part of the first face of each abrasive element is adjacent at least part of the second face of an adjacent element, the abrasive elements being substantially planar and having an inner edge and an opposing outer edge, the inner edges together defining central bore forming the support by injecting molten thermoplastic material into contact with the abrasive elements and allowing the thermoplastic material to solidify, wherein the support does not extend along the full length of the central bore.

The invention provides a simple, economic and effective method of securing a plurality of abrasive elements to a support, for example a plurality of flaps to form a flap brush.

In a method in accordance with the invention described herein, a predetermined amount of polymeric material only is injected to form the support.

The method may further include the step of providing a shaft, and allowing the thermoplastic material to cool and solidify such that the shaft is secured to the abrasive elements. In that embodiment, the invention provides a simple, economical and effective method of securing a shaft to a plurality of abrasive elements, thus forming a shaft-mounted flap brush/wheel or similar article.

The abrasive elements that the axis of the shaft to which the elements are secured lies substantially in the plane of each element. The molten thermoplastic material is injected into the bore. In this way, the support is in the form of a central boss, the inner edges of the abrasive elements being coupled thereto. The shaft, when provided, is advantageously positioned prior to injection of the molten thermoplastic material so that it extends generally along the central axis of the circular array. The end of the shaft may extend into the bore defined by the first edges of the abrasive elements. In this way, the thermoplastic material will completely surround the shaft. In another embodiment, the shaft may pass through the bore with the end projecting beyond the surface of the abrasive elements.

Generally the shaft used in the invention is a metal shaft e.g. steel. The end of the shaft secured to the support is preferably roughened or knurled. The end may be plated e.g. nickel plated and/or coated with a primer and/or adhesive to facilitate bonding with the thermoplastic material used to form the support.

The abrasive article may conveniently be made in a mould comprising a first mould plate and a second mould plate which form a mould cavity to accommodate the abrasive elements and form the support. One of the mould plates comprises a bore into which the shaft is positioned so that one end projects into the mould cavity. The abrasive elements are positioned in the mould cavity to form a circular array so that the end of the shaft projects into the central bore defined by the abrasive elements. One of the mould plates comprises a channel for injection of the molten thermoplastic material.

In one embodiment, the channel is positioned opposite the end of the shaft. The mould plate in which the channel is located may be formed with an insert, which may be cylindrical or dome shaped or any other suitable shape. The insert protrudes into the central bore defined by the abrasive elements and reduces the volume of thermoplastic material required to make the support.

It is not essential to use a metal shaft in the abrasive articles and in accordance with a further embodiment of the invention a shaft is integrally formed of the thermoplastic material with the support. In this embodiment a mould plate may comprise a channel defining the shaft in communication with the mould cavity. The abrasive elements are positioned in the mould cavity, the mould closed and molten thermoplastic material injected through the channel into the mould cavity thereby simultaneously forming the support and the shaft.

The abrasive elements used in the invention can comprise a non-woven fibrous material, for example a uniform lofty web of continuous three-dimensionally autogenously bonded filaments. The web may be impregnated with an adhesive binder and may contain a multitude of abrasive grains or granules dispersed throughout the web. The thickness, length and composition of the filaments and the type of adhesive binder and abrasive particles may be selected depending upon the intended application of the abrasive article. Suitable webs from which the abrasive elements are cut are known and disclosed, for example, in US 2,958,593, US 4,227,350, US 5,928,070 and US 6,302,930. The abrasive elements may have foam injected into the web in a similar way to the web material used in the product commercially available from 3M Company under the trade name 3M ROLOC HI-PERFORMANCE CLEAN 'N STRIP Abrasive Disc H1-DC.

The abrasive elements may be made from other materials, such as coated abrasive materials. Coated abrasive materials generally comprise a substrate to which a plurality of abrasive particles are bonded by suitable bond systems. Various coated abrasives are known to the person skilled in the art.

The abrasive article of the invention may alternatively comprise abrasive elements made of two or more different materials. For example, some of the elements may be made of a non-woven material and some may be made of a coated abrasive material.

The abrasive elements may have the same or different abrasive grades and may have the same or different thickness. The abrasive elements can be suitable for a wide variety of applications including polishing, removal of mill scale from steel coil stock, blending of weld lines, preparing surfaces for painting or other coating operations, removal of various surface coatings in repair and maintenance operations etc.

Where the abrasive elements comprise a material that is porous to the injected thermoplastic material, for example a non-woven material, the molten thermoplastic material advantageously penetrates into the interstices between the fibres of the material ensuring the support is securely attached to the abrasive elements. Where the abrasive elements comprise a material that is non-porous to the injected thermoplastic material, for example a coated abrasive material or some foam-filled non-woven materials, the thermoplastic material bonds to the abrasive material and the material of the shaft by way of a mechanical attachment and/or bonding.

A wide range of thermoplastic materials may be used. Where the abrasive elements comprise a porous material, the thermoplastic material is selected so that it will have a suitable viscosity at the injection temperature, generally 200 to 280 °C, for example to penetrate the pores of the abrasive elements. It is preferred that the thermoplastic material contracts slightly when cooled from its molten state since this improves mechanical interlock with the end of the shaft. Exemplary thermoplastic materials include thermoplastic polyether ester elastomer block copolymers comprising hard (crystalline) segments of polybutylene terephthalate and soft (amorphous) segments based on long-chain polymether glycols commercially available from DuPont under the trade name HYTREL; polyamides, such as nylon 66 e.g. commercially available from LATI Industria Termoplastic S.p.A. under the trade name LATAMID, and an injection moulding homopolymer available, under the trade name "CAPRON 8202HSBK102", from BASF CANADA of Mississauga , ON, Canada; and polyolefins, such as polyethylene and polypropylene. The thermoplastic material may optionally contain filler and/or reinforcing fibres.

Suitable injection moulding machines for use in the invention are well known and may have vertical or horizontal moulding orientations. A vertical orientation moulding machine provides one advantage since it facilitates positioning of the shaft and controlling of the spread of the molten thermoplastic material forming the support. Suitable injection moulding machines are commercially available from Arburg GmbH under the trade name ALLROUNDER. Horizontal injection moulding machines are widely available and may also be used. They provide an advantage in that the metal shaft may be positioned in the opposite mould half to the abrasive elements, both shaft and elements being held by interference fits in the mould halves prior to polymer injection.

The extent of penetration of the molten thermoplastic material into the abrasive elements can be controlled by injecting only a limited amount (i.e. a shot) of molten thermoplastic material into the mould cavity of the injection moulding machine. In that case, because the thermoplastic material is not actually required to fill the mould cavity, the use of the customary closed mould cavity is not essential.

The present invention will now be described, by way of example only, with reference to the accompanying drawings, in which:
Figure 1 is a perspective view of an abrasive article made according to the present invention;
Figure 2 is a cross-sectional view of the abrasive article shown in Figure 1 showing an enlarged view of the connection between the abrasive elements and the support;
Figure 3 is a diagrammatic cross-sectional view of a mould used to make the abrasive article shown in Figures 1 and 2;
Figure 4 is a cross-sectional view of a further abrasive article made according to the invention;
Figure 5 is a diagrammatic cross-sectional view of a mould used to make the abrasive article shown in Figure 4; and
Figure 6 is similar to Figure 3 but shows the mould modified to make an alternative form of abrasive article.

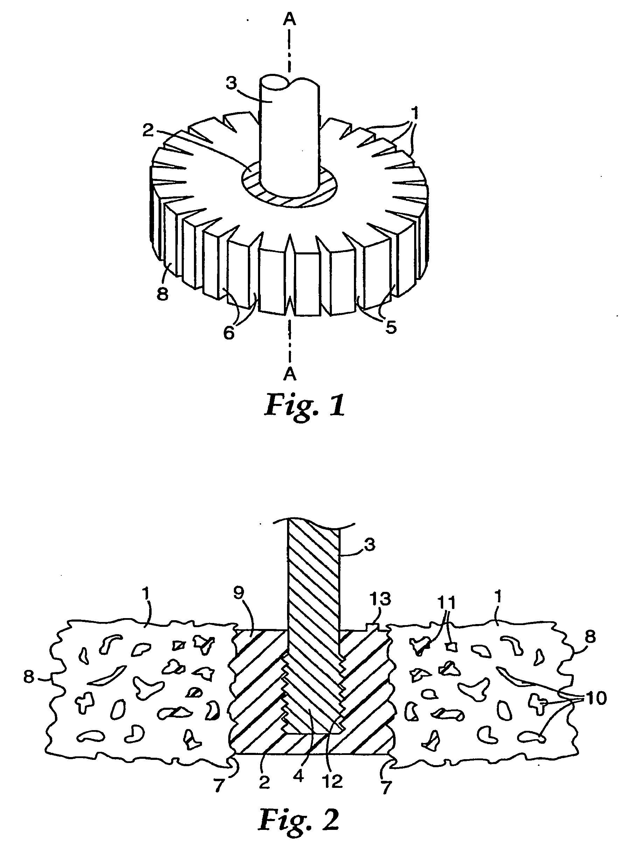

The abrasive article shown in Figure 1 comprises a plurality of abrasive elements 1 arranged into a circular array, a support 2 and a metal shaft 3. By circular array, it is meant that the elements are arranged circumferentially to form a circular shape. An end 4 of the shaft 3 is received in the support 2 so as to secure the shaft 3 to the abrasive elements 1. The axis A-A of the shaft 3 lies generally in the plane of the abrasive elements, which extend radially away from the shaft.

The abrasive elements 1 are made from an abrasive non-woven web material, for example the product commercially available from 3M Company under the trade name SCOTCH-BRITE™. The support 2 is made from injection moulded thermoplastic material.

The abrasive elements 1 are substantially planar, though they can become compressed in the abrasive article to a degree which varies in the radial direction as seen in Figure 1. Each abrasive element has a first face 5, an opposing second face 6, an inner edge 7, and an opposing outer edge 8. The first face 5 of each element is adjacent the second face 6 of an adjacent element, and consequently the second face 6 of each element is adjacent the first face 5 of another adjacent element. The inner edges 7 together form a central bore 9 though the circular array of elements 1. The inner 7 and outer 8 edges extend in a direction generally parallel to the axis of the shaft 3.

The end 4 of the shaft 3 is located in the central bore 9, as can be seen in Figure 2. The support 2 is also located in the central bore 9 and so the thermoplastic material substantially fills the space in the bore 9 which is not occupied by the end 4 of the shaft 3 so as to secure the shaft 3 to the support 2.

The connection between the abrasive elements 1 and the support 2 is achieved as a result of the thermoplastic material penetrating the interstices 10 between fibres of the non-woven web material of the abrasive elements 1. During the injection moulding process, some of these interstices are filled with the plastic material as shown schematically at 11 in Figure 2. In this way, the material of the support 2 impregnates the inner part of the abrasive elements 1 so that at least part of the support 2 is formed in the abrasive elements 1.

As shown, the support 2 does not extend along the full length of the central bore 9, to allow the abrasive end face of the abrasive article, as well as the abrasive curved surface, to be applied to a surface to be abraded. The end of the shaft is provided with a roughened or knurled surface 12 to enhance mechanical engagement between the shaft 3 and the support 2.

The support 2 may be formed with indicia 13 moulded therein to act as a label.

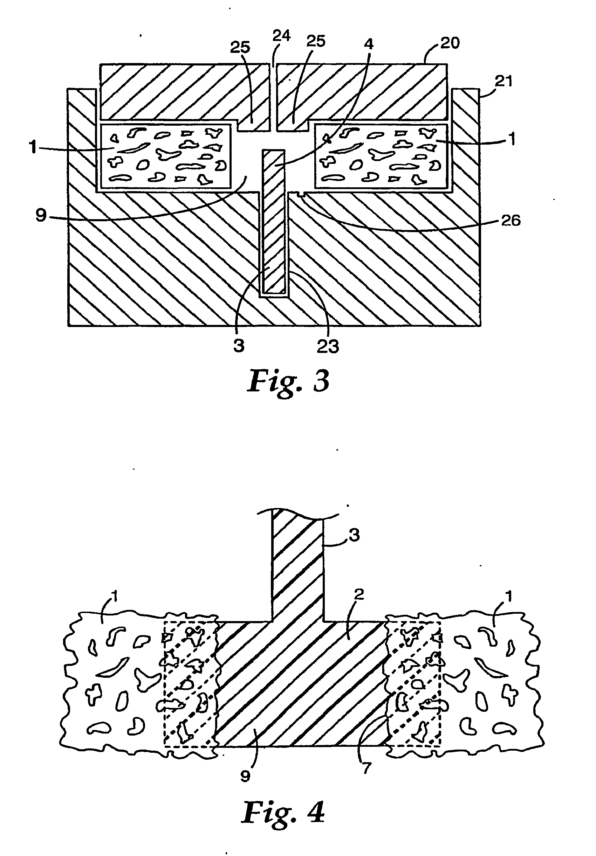

The abrasive article is formed using the mould shown in Figure 3. The mould comprises a first plate 20 and a second plate 21 which together form a mould cavity. The second plate 21 has a bore 23 in which the shaft 3 is positioned. The length of the bore 23 is such that an end 4 of the shaft 3 protrudes into the mould cavity. The abrasive elements 1 are placed in the mould cavity so that the end 4 of the shaft 23 is located in the central bore 9 defined by the inner edges 7 of the abrasive elements 1. The first 20 and second 21 plates are then closed. Slight compression of the abrasive elements in the mould cavity occurs as the mould is closed.

The first plate 20 is formed with a channel 24 through which plastic material is injected into the mould cavity. In the embodiment shown, the first plate 20 is also formed with a cylindrical insert 25 in its centre which results in the finished support 2 extending only partially through the central bore 9 formed by the inner edges 7.

In other embodiments, the insert may be domed so that the surface of the support is concave, or the first plate may be formed without any insert at all.

Either or both plates 20, 21 may have a moulding surface formed with a series of recesses 26 into which plastic material is injected to mould indicia into the support to act as a label.

When the mould is closed around the shaft 3 and the abrasive elements 1, a limited amount (i.e. a shot) of molten thermoplastic material is injected under pressure through the channel 24. The thermoplastic material flows into the central bore 9 and surrounds the shaft 3, and flows into the interstices 10 in the abrasive elements 1 in the region of the inner edges 7. The thermoplastic material is then allowed to cool and solidify. In this way, the shaft 3 is firmly secured in the support 2 which itself is firmly anchored to the abrasive elements.

In a modified version of the abrasive article 1 of Figure 1, the shaft 3 is omitted and the support 2 is foamed for connection to a separate shaft, for example by being provided with a suitable bore or a thread. To make an article of that type, the second mould plate 21 of Fig. 3 would be modified by replacing the bore 23 with a suitably-shaped mandrel positioned on the mould plate 21 to extend into the central bore 9.

A second embodiment of the invention is shown in Figure 4. Like components are referred to using like reference numerals. In this embodiment, the support 2 and the shaft 3 are formed integrally from injection moulded thermoplastic material. As with the embodiment shown in Figure 2, thermoplastic material penetrates into the interstices in the abrasive elements in the region near the first edges 7 (indicated schematically in Figure 4 in broken lines) but preferably, as shown, does not extend all the way to the end of the central bore 9 for the reason explained above.

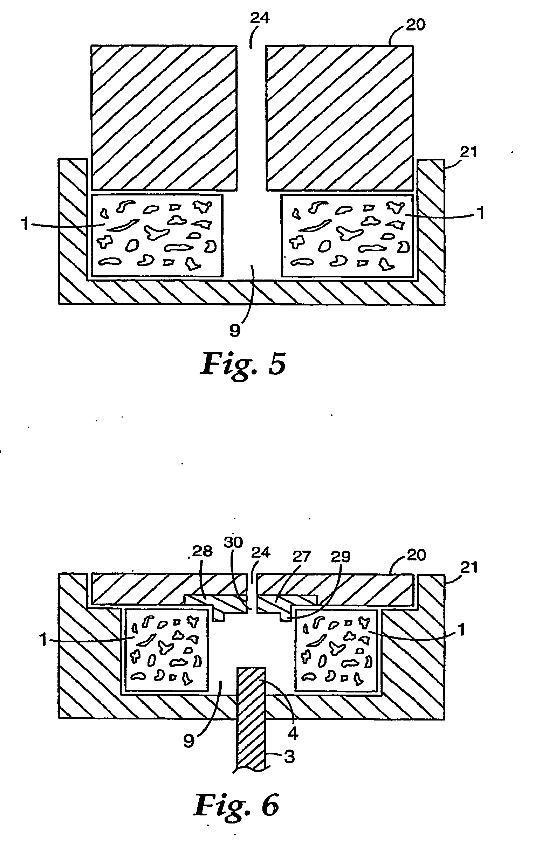

The abrasive article according to this embodiment may be formed using the mould shown in Figure 5. As in the mould shown in Figure 3, this mould has a first plate 20 and a second plate 21 which form a mould cavity. The first plate 20 is formed with a channel 24 through which the thermoplastic material is injected into the mould cavity. The channel 24 is sized so as to define a shaft 3 for the abrasive article. The mould plates do not have an insert 25.

In use, the abrasive elements 1 are placed in the mould cavity and the first 20 and second 21 plates are brought together to close the mould. Slight compression of the abrasive elements I may occur when the mould is closed. A limited amount of molten thermoplastics material is then injected under pressure through the channel 24 into the central bore 9 defined by the inner edges 7 of the abrasive elements 1 to form the support 2. When the thermoplastic material has been injected into the mould cavity to form the support, the plastic material is allowed to fill the channel 24 so as to form the shaft 3. The plastics material is then allowed to cool and solidify.

Figure 6 illustrates a further method of making an abrasive article in accordance with the invention. This method involves the use of a mould which is generally similar to that shown in Figure 3 except that the insert 25 in the first mould plate 20 is replaced by a recess shaped to accommodate a separate insert 27. The insert 27 is positioned in the end of the central bore 9 of the abrasive elements 1, remote from the shaft 3, before the thermoplastic material is injected into the mould. The insert 27 comprises an end cap 28 that extends over the end of the bore 9, and a cylindrical extension 29 that extends into the bore 9 to position the insert. A channel 30 in the insert functions as a continuation of the channel 24 ifn the mould plate 20, through which the injected thermoplastic material can flow into the bore 9. When the thermoplastic material has cooled and solidified, the insert 27 is firmly anchored in the bore 9 and provides the abrasive article with a neat appearance on the side remote from the shaft 3, although it also has the effect of reducing the useful abrasive surfaces of the abrasive article.

For the purpose of the methods described above with reference to Figures 3, 5 and 6, the abrasive elements 1 can be positioned in a circular arrangement in the following, known, manner. The abrasive elements are first arranged in a line, which is compressed in the longitudinal direction to form a compacted stack. Then, while the compression is maintained, adhesive tape or a hot-melt adhesive is applied to one side of the stack. The compressing force is then removed allowing the un-secured side of the stack to expand and, in turn, causing the assembly of abrasive elements 1 to curl around into a circular arrangement that can be placed in the mould cavity of Figures 3, 5 or 6 as already described.

In the methods described above with reference to Figures 3, 5 and 6, the extent to which the thermoplastic material of the support 2 penetrates into the non-woven material of the abrasive elements 1 can be controlled by injecting only a limited amount (i.e. a shot) of molten thermoplastic material into the mould cavity through the channel 24. The extent of penetration of the molten thermoplastic material may also be limited by the density of the non-woven material, which in turn will be affected by the extent to which the abrasive elements 1 are compressed when they are placed in the mould.

The amount of thermoplastic material that is injected into the mould cavity can be controlled by means of a suitable valve (not shown) located in the channel 24 of the mould. The channel 24 is connected to a suitable supply of molten thermoplastic material under pressure so that, if the valve is opened for a predetermined interval of time, a predetermined amount of the thermoplastic material will be injected into the mould cavity, sufficient to form the central support 2 and to penetrate, to the desired extent, into the flaps 2 of abrasive material. The process thus differs from a conventional injection moulding process in which the injection of molten thermoplastic material into the mould would continue until the mould cavity has been filled. The process may, nevertheless, be carried out using a conventional injection moulding machine suitably-adapted for the purpose although, as already mentioned, because the mould cavity is never filled with the injected thermoplastic material, it is not actually essential for the mould to be closed. Through the use of such a process, it can be ensured that the injected thermoplastic material does not permeate throughout the material of the abrasive elements 1 and, because the material is not subjected to the high pressures normally generated in the mould cavity of an injection moulding machine, the risk of structural damage to the elements 1 is minimized.

The valve used to control the amount of thermoplastic material injected into the mould cavity may be of any suitable type, one being an electromagnetically-controlled needle valve known for use in sprueless injection moulding. A suitable valve is an electromagnetic needle valve available, under the trade name "Z 1081" from HASCO Hasenclever GmbH + Co KG of Lüdenscheid, Germany. The opening of the valve can be controlled by the injection machine itself.

Abrasive articles in which some or all of the abrasive elements 1 are made of a coated abrasive material can be made using the methods described above. In such cases, the thermoplastic material does not penetrate into the body of the abrasive elements. Instead, the thermoplastic material mechanically attaches or bonds to the coated abrasive material.

A method in accordance with the invention is illustrated by the following non-limiting example:

### Example

A non-woven abrasive web available, under the trade name "Cutting and Polishing Type A Medium Grade" from 3M Company of St. Paul, Minnesota U.S.A., is die cut into flaps 30mm wide and 45mm long. Thirty-six such flaps strips are arranged in a circle so that the longer edges on one side of the flaps define a central bore, and are placed in a mould as illustrated in Fig. 3 together with a nickel-plated steel shaft. The shaft has a length of 50mm and a diameter of 6mm, and is knurled at one end over a length 10mm to a depth of 0.2mm: a suitable shaft is commercially available from Wieland-Werke AG, of Ulm, Germany.

A low-viscosity polyamide 6 thermoplastic material, commercially available under the trade name "Ultramid(R) 8202 C" from BASF Corporation, of Wyandotte, MI 48192, USA is then injected into the mould cavity and allowed to cool, to bond the non-woven material to the shaft and form an abrasive flap brush of the type shown in Figure 1.

A 50T vertical orientation injection moulding machine available, under the trade name "BATTENFELD BA500 (50T)", from Battenfeld Kunstsoffmaschinen of Kottingbrunn, Austria can be used to carry out the method of this example. The machine is used to inject a shot of molten thermoplastic material at an appropriate temperature into the mould cavity, sufficient to ensure that the thermoplastic material penetrates to the desired extent into the non-woven abrasive flaps.

## Claims

1. A method of making an abrasive article comprising a plurality of individual abrasive elements (1) having a first face (5) and an opposing second face (6) and a support (2) for securing the abrasive elements to a shaft (3) the method comprising:
arranging the abrasive elements into a circular array such that at least part of the first face of each abrasive element is adjacent at least part of the second face of an adjacent element, the abrasive elements being substantially planar and having an inner edge (7) and an opposing outer edge (8), the inner edges of the abrasive elements together defining a central born (9),
forming the support by injecting molten thermoplastic material into contact with the abrasive elements; and
allowing the thermoplastic material to cool and solidify;
**characterised in that** the support does not extend along the full length of the central bore.

2. The method of claim 1, including the step of providing a shaft (3), and allowing the thermoplastic material to cool and solidify such that the shaft is secured to the abrasive elements (1).

3. The method of claim 2, in which the axis of the shaft (3) lies substantially in the plane of each element (1).

4. The method of claim 1, in which the molten thermoplastic material is injected into the bore (9) into the bore (9)

5. The method of claim 2, including positioning the shaft (3) prior to injection of the molten thermoplastic material so that it extends generally along the central axis of the circular array.

6. The method of any one of the preceding claims, in which a predetermined amount of polymeric material is injected to form the support (2).

7. The method of any one of the preceding claims, in which the abrasive elements (1) are formed of a fibrous non-woven material, a foam-filled fibrous non-woven material, a coated abrasive material, or a combination thereof.

## Patentansprüche

1. Verfahren zur Herstellung eines Schleifgegenstandes, der mehrere einzelne Schleifelemente (1), die eine erste Fläche (5) und eine gegenüberliegende zweite Fläche (6) aufweisen, und eine Halterung (2) zum Befestigen der Schleifelemente an einer Welle (3) umfasst, wobei das Verfahren Folgendes umfasst:
Anordnen der Schleifelemente in einer kreisförmigen Reihe derart, dass mindestens ein Teil der ersten Fläche jedes Schleifelements an mindestens einen Teil der zweiten Fläche eines angrenzenden Elements angrenzt, wobei die Schleifelemente im Wesentlichen eben sind und eine Innenkante (7) und eine gegenüberliegende Außenkante (8) aufweisen, wobei die Innenkanten der Schleifelemente zusammen eine mittige Öffnung (9) definieren,
Bilden der Halterung durch Einspritzen geschmolzenen thermoplastischen Materials in Kontakt mit den Schleifelementen und
Ermöglichen des Auskühlens und Verfestigens des thermoplastischen Materials,
**dadurch gekennzeichnet, dass** sich die Halterung nicht über die gesamte Länge der mittigen Öffnung erstreckt.

2. Verfahren nach Anspruch 1, den Schritt des Bereitstellens einer Welle (3) und das Ermöglichen des Auskühlens und Verfestigens des thermoplastischen Materials derart beinhaltend, dass die Welle an den Schleifelementen (1) befestigt wird.

3. Verfahren nach Anspruch 2, wobei die Achse der Welle (3) im Wesentlichen mit jedem Element (1) auf einer Ebene liegt.

4. Verfahren nach Anspruch 1, wobei das geschmolzene thermoplastische Material in die Öffnung (9) eingespritzt wird.

5. Verfahren nach Anspruch 2, das Anordnen der Welle (3) vor dem Einspritzen des thermoplastischen Materials derart beinhaltend, dass sie sich im Allgemeinen entlang der Mittelachse der kreisförmigen Reihe erstreckt.

6. Verfahren nach einem der vorhergehenden Ansprüche, wobei eine vorbestimmte Menge von Polymermaterial eingespritzt wird, um die Halterung (2) zu bilden.

7. Verfahren nach einem der vorhergehenden Ansprüche, wobei die Schleifelemente (1) aus einem Faservliesmaterial, einem schaumgefüllten Faservliesmaterial, einem beschichteten Schleifmaterial oder einer Kombination daraus gebildet sind.

## Revendications

1. Procédé de fabrication d'un article abrasif comprenant une pluralité d'éléments abrasifs distincts (1) ayant une première face (5) et une deuxième face opposée (6) et un support (2) pour fixer les éléments abrasifs à un arbre (3), le procédé consistant à :
disposer les éléments abrasifs en un ensemble circulaire de telle sorte qu'au moins une partie de la première face de chaque élément abrasif soit adjacente à au moins une partie de la deuxième face d'un élément adjacent, les éléments abrasifs étant sensiblement plats et ayant un bord intérieur (7) et un bord extérieur opposé (8), les bords intérieurs des éléments abrasifs délimitant conjointement un alésage central (9),
former le support en injectant un matériau thermoplastique fondu de telle sorte qu'il entre en contact avec les éléments abrasifs ; et
laisser le matériau thermoplastique refroidir et se solidifier ;
**caractérisé en ce que** le support ne s'étend pas sur toute la longueur de l'alésage central.

2. Procédé selon la revendication 1, comprenant l'étape qui consiste à fournir un arbre (3), et à laisser le matériau thermoplastique refroidir et se solidifier de telle sorte que l'arbre soit fixé aux éléments abrasifs (1).

3. Procédé selon la revendication 2, dans lequel l'axe de l'arbre (3) se trouve sensiblement dans le plan de chaque élément (1).

4. Procédé selon la revendication 1, dans lequel le matériau thermoplastique fondu est injecté dans l'alésage (9).

5. Procédé selon la revendication 2, comprenant un positionnement de l'arbre (3) avant l'injection du matériau thermoplastique fondu de telle sorte qu'il se prolonge d'une manière générale le long de l'axe central de l'ensemble circulaire.

6. Procédé selon l'une quelconque des revendications précédentes, dans lequel une quantité prédéterminée de matériau polymère est injectée pour former le support (2).

7. Procédé selon l'une quelconque des revendications précédentes, dans lequel les éléments abrasifs (1) sont formés d'un matériau non tissé fibreux, d'un matériau non tissé fibreux rempli de mousse, d'un matériau abrasif pourvu d'un revêtement, ou d'une combinaison de ceux-ci.
